Europäisches Patentamt

European Patent Office

Office européen des brevets

(19)

(11) Publication number: **0 130 507**
**A1**

# (12) EUROPEAN PATENT APPLICATION

(21) Application number: **84107204.4**

(22) Date of filing: **22.06.84**

(51) Int. Cl.⁴: **H 01 M 6/14,** H 01 M 4/36, C 01 G 33/00

(30) Priority: **24.06.83 US 507668**

(43) Date of publication of application: **09.01.85 Bulletin 85/2**

(84) Designated Contracting States: **DE FR GB**

(71) Applicant: **RAYOVAC Corporation, 101 East Washington Avenue, Madison Wisconsin 53703 (US)**

(72) Inventor: **Fleischer, Niles Aaron, 12 Pinsker Street Apt. 2B, IL-76308 Rehovot (IL)**
Inventor: **Manske, Susan M., 504 7th Street, Waunakee Wisconsin 53597 (US)**

(74) Representative: **Wuesthoff, Franz, Dr.-Ing. et al, Patentanwälte Wuesthoff -v. Pechmann-Behrens-Goetz Schweigerstrasse 2, D-8000 München 90 (DE)**

(54) **High conductivity thionyl chloride electrolytes.**

(57) The conductivity of a liquid oxychloride, such as thionyl chloride, is increased by dissolving therein combinations of salts including niobium pentachloride and a lithium salt from the group bromide, chloride, sulfide and oxide. Voltage delay in lithium cells using certain of the resulting electrolytes is reduced.

EP 0 130 507 A1

# HIGH CONDUCTIVITY THIONYL CHLORIDE ELECTROLYTES

The invention is directed to electrochemical cells having anodes made of active metal above hydrogen in the EMF series and having an inorganic liquid oxyhalide cathode depolarizer, and more particularly to the improvement of electrolyte conductivity and reduction of voltage delay in the lithium-thionyl chloride cell.

It has become evident to the art that electrochemical cells having active metal anodes, i.e., anodes made of a metal having an activity higher than hydrogen in the EMF series, offer advantages particularly in terms of high energy density. Since the metals to be employed as anode, e.g., sodium, potassium, calcium, lithium    , and their alloys, react with water a non-aqueous medium is employed. Cells employing liquid oxyhalide as cathode depolarizer, a metal such as lithium as anode, a porous carbon current collector have been described, for example, in U.S. Patent No. 3,926,669, U.K. Patent No. 1,409,307, etc. Liquid oxyhalides such as thionyl chloride have poor electrical conductivity, hence an electrolyte salt such as lithium aluminum tetrachloride is dissolved therein to improve conductivity. The

0130507

-2-

resulting system has been found to be susceptible to the problem of voltage delay, to wit, a dip in operating voltage below a defined cutoff voltage after application of a load and the time required to rise back to the cutoff voltage. The problem is a serious one since many electronic devices to be powered thereby require a specified and substantially constant voltage to be efficiently operative. The problem and suggested solutions are described in U.S. Patents No. 4,238,552 and No. 4,228,229.

It is considered that the voltage delay problem may be associated in some way with the use of lithium aluminum tetrachloride as the conductivity-improving salt in the electrolyte. However, the search for a substitute material which would enhance conductivity and reduce voltage delay in the electrolyte has been difficult and unpredictable. Thus, many salts are either insoluble (or insufficiently soluble) or nonconductive, or both in thionyl chloride. The reason for this is the extremely low dielectric constant of thionyl chloride $(SOCl_2)$. For $SOCl_2$, the dielectric constant is 9.25 at 20°C whereas the dielectric constant for water is 80.1 at 20°C. The lower the dielectric constant for a solvent, the harder it is for a salt to ionize in and contribute conductivity to, the solvent-solute system. In contrast to $SOCl_2$, many salts can dissolve in and ionize in water to provide aqueous electrolytes having orders of magnitude greater productivity than $SOCl_2$ electrolytes.

U.S. Patent No. 4,307,160 describes a lithium-thionyl chloride cell wherein niobium pentachloride is dissolved in the thionyl chloride, but the resulting battery is said to be suitable only for low rate applications indicating that niobium pentachloride alone does not materially increase the conductivity of thionyl chloride.

The conductivity of thionyl chloride for use in a non-aqueous battery having an active metal anode such as lithium and a porous carbon cathode current collector is improved by dissolving therein niobium pentachloride and a compound of the group consisting of lithium bromide, lithium sulfide, lithium oxide and lithium chloride.

In accordance with the invention, the desired combination of conductivity-enhancing ingredients is preferably added to purified thionyl chloride in approximately equimolar amounts. The quantities of equimolar mixture dissolved in thionyl chloride may be in the range of 0.1 molar to 1 molar or more, depending upon the performance desired. The resulting electrolyte is then used to make up cells having lithium anodes and porous carbon current collectors. A marked reduction in voltage delay of the lithium anode results using electrolytes containing combinations of $NbCl_5$ and either or both $Li_2O$ and $Li_2S$ as compared to cathode-electrolytes of thionyl chloride containing lithium aluminum tetrachloride.

0130507

-4-

Examples will now be given:

EXAMPLE 1

As set forth in the following Table, combinations of conductivity-enhancing ingredients were added to 40 ml aliquots of thionyl chloride and the conductivities of the resulting solutions were determined at 26°-27°C with a measuring frequency of 1 $KH_z$. The results are set forth in the Table I.

It is notable that while a 1M niobium pentachloride addition was ineffective in increasing conductivity, and that lithium sulfide alone has little conductivity, the combinations of any of lithium chloride, lithium bromide, lithium oxide or lithium sulfide with niobium pentachloride was highly effective.

EXAMPLE 2

Flooded cell tests using three lithium electrodes demonstrated the marked improvement in voltage delay using certain electrolytes provided in accordance with the invention. In the test, current was passed at an anode current density of 6 $mA/cm^2$ from the anode to a counterelectrode and the potential difference with respect to a lithium reference electrode was measured over time. The electrodes were

## TABLE I

### SOCl$_2$ ELECTROLYTE CONDUCTIVITIES

Temp Range: 26°-27°C
Measuring Frequency: 1 kHz

| Salt | Conductivity, mS · cm$^{-1}$ | Approximate Concentration | Amount added to 40 mls of SOCl$_2$, grams |
|---|---|---|---|
| (LiAlCl$_4$ as | | | |
| LiCl + AlCl$_3$) | 19.7 | 1.6M | 2.713 + 8.534) |
| LiBr + AlCl$_3$ | 14.5 | 1 M | 3.474 + 5.334 |
| NbCl$_5$ | 0.01 | 1 M | 10.807) |
| LiCl + NbCl$_5$ | 12.0 | 1 M | 1.693 + 10.807 |
| LiBr + NbCl$_5$ | 13.9 | 1 M | 3.474 + 10.807 |
| Li$_2$S + NbCl$_5$ | 13.2 | 1 M | 1.838 + 10.807 |
| Li$_2$O + NbCl$_5$ | 13.2 | 1 M | 1.195 + 10.807 |
| Li$_2$O + NbCl$_5$ | 12.2 | 0.5M/1M | 0.598 + 10.807 |
| Li$_2$S | -- | 0.003 M | 1.838 |

-6-

exposed to test electrolyte for five days prior to test. The voltage-time curve resulting from the test typically drops swiftly to a voltage representing the maximum anode polarization, then recovers at a variable rate to a steady state. The smaller the voltage drop, the less the anode polarization and hence the less the voltage delay.

Testing in an electrolyte of thionyl chloride having added 1M $NbCl_5$ and $Li_2S$ (based on dry salt weight and $SOCl_2$ volume) a lithium anode yielded a maximum anode polarization voltage of 0.335 as against an anode polarization voltage of 5.815 using a thionyl chloride electrolyte containing $LiAlCl_4$ at 1.6M concentration. The test constituted a further indication that the $SOCl_2$-$LiAlCl_4$ electrolyte itself contributes to the voltage delay problem.

EXAMPLE 3

Further tests were conducted in thionyl chloride electrolytes containing $NbCl_5$ and $Li_2S$ as prepared in Example 2. In one set of tests the lithium anodes were smooth while in the other set the anodes were embossed mechanically to increase the surface area by a factor of two. The results are set forth in the following Table II wherein "$\bar{x}$" denotes the average maximum anode polarization, "$\sigma$" denotes the standard deviation and "$n$" denotes the number of tests.

## TABLE II

| | | Control Anode (Smooth) | | Embossed Anode | |
|---|---|---|---|---|---|
| | | Set A | Set B | Set A | Set B |
| $\bar{x}$ | | 0.686V | 0.775V | 0.289 | 0.378 |
| $\sigma$ | | 0.283 | 0.049 | 0.206 | 0.125 |
| $\eta$ | | 4 | 2 | 4 | 3 |

The testing (conducted as in Example 2) confirmed that optimum results in terms of reduced voltage delay were achieved using the $NbCl_5$-$Li_2S$ electrolyte in thionyl chloride and an anode having an extended surface area which may be provided by embossing or other surface treatment.

### EXAMPLE 4

Further testing (conducted as in Example 2) as set forth in Table III demonstrated that $NbCl_5$ dissolved by itself in thionyl chloride does not aid voltage delay but contributes to it, and that an addition of equimolar $NbCl_5/Li_2S$ (based on dry salt weight and $SOCl_2$ volume) reduces voltage delay in $SOCl_2/LiAlCl_4$. $NbCl_5/Li_2O$ was also effective. Best results are achieved with $SOCl_2$ by adding equimolar amounts of $NbCl_5$ and $Li_2S$ to thionyl chloride. Smooth lithium anodes were used. The data in Table III are an average of at least two measurements per variation.

## TABLE III

| Electrolyte | Maximum anode Polarization-volts |
|---|---|
| $SOCl_2$ + 1M $NbCl_5$ | 5.782 |
| $SOCl_2$ + 1.6M $LiAlCl_4$ | 5.815 |
| $SOCl_2$ + 0.2M $NbCl_5/Li_2S$ 1.6M $LiAlCl_4$ | 1.363 |
| $SOCl_2$ + 1M $NbCl_5/Li_2S$ (1M + 1M mixture) | 0.686 |
| $SOCl_2$ + 1M $Li_2O/NbCl_5$ (1M + 1M mixture) | 1.650 |

After 46 days storage in electrolyte, a smooth lithium anode in $SOCl_2$ + 1.6M $LiAlCl_4$ gave 5.50 volts polarization; while an embossed anode in $SOCl_2$ + $NbCl_5$ (1M:1M) gave 1.77 volts polarization.

## EXAMPLE 5

Niobium chloride and lithium sulfide were added singly and in combination to thionyl chloride and the resulting electrolytes were then analyzed with the results set forth in the following Table IV.

TABLE IV

| Salt Combination (amount added to $SOCl_2$) | Analyzed Molar Concentration | |
| --- | --- | --- |
| | $NbCl_5$ | $Li_2S$ |
| 1.0 M $NbCl_5$ | 0.93 | 0.0 |
| 1.5 M $NbCl_5$ | 0.93 | 0.0 |
| 1.0 M $Li_2S$ | 0.0 | 0.003 |
| 1.0 M $NbCl_5$ + 1.0 M $Li_2S$ (1:1) | 0.93 | 0.48 |
| 1.5 M $NbCl_5$ + 1.2 M $Li_2S$ (1.25:1) | 0.96 | 0.49 |
| 1.0 M $NbCl_5$ + 0.5 M $Li_2S$ (2:1) | 0.90 | 0.47 |

The results of Table IV indicate that lithium sulfide by itself has little solubility in thionyl chloride. The indications are that the complex salt which is formed contains approximately one molecule of $Li_2S$ for each two molecules of $NbCl_5$. An empirical formula for the salt appears to be close to $Li_2SNb_2Cl_{10}$. However, when 1.0M $NbCl_5$ is mixed with 0.5M $Li_2S$ (a 2:1 ratio) in thionyl chloride, the resulting cathode-electrolyte is not as effective in reducing voltage delay as is the case when a 1:1 mixing ratio is used. A 1:1 mixing ratio is also preferred for $Li_2O$ + $NbCl_5$ and an empirical formula close to $Li_2ONb_2Cl_{10}$ is postulated.

-10-

EXAMPLE 6

An electrolyte of $NbCl_5$ + $Li_2S$ provided in accordance with the invention was compared to $AlCl_3$ + $Li_2S$, both in thionyl chloride with the results set forth in the following Table V. The technique of Example 2 was employed and duplicate tests were run.

TABLE V

| 1M; 1:1 mix ratio | Max Anode Polarization volts (6 mA/cm$^2$) | Conductivity mS·cm$^{-1}$(1000Hz) |
|---|---|---|
| $AlCl_3$ + $Li_2S$ | 0.933 | 12.76 |
| $NbCl_5$ + $Li_2S$ | 0.568 | 13.20 |

The $NbCl_5$ + $Li_2S$ electrolyte is clearly superior in terms of reducing voltage delay.

EXAMPLE 7

The concentration of the $NbCl_5$/$Li_2S$ complex salt in thionyl chloride can be increased by initially forming the complex in thionyl chloride, evaporating the excess thionyl chloride and redissolving the complex salt residue in fresh thionyl chloride to form a new electrolyte. The conductivity of the new electrolyte is also increased. The following Table VI demonstrates the foregoing.

-11-

TABLE VI

| Sample | Conductivity mS · $cm^{-1}$ | Nb | Li |
|---|---|---|---|
| Original $NbCl_5/Li_2S$ in $SOCl_2$ | 13.2 | 0.91M | 0.96M |
| Redissolved $NbCl_5/Li_2S$ in $SOCl_2$ | 16.5 | 1.42M | 1.64M |
| $LiAlCl_4$ in $SOCl_2$ | 20.4 | - | 1.60M |

Electrolysis of a thionyl chloride-$NbCl_5/Li_2S$ electrolyte using a nickel cathode at a potential sufficient to plate out the cation of the complex salt produced a deposit which was essentially lithium, thereby showing that $Li^+$ is the cation of the new complex salt.

It is also to be understood that alloys of lithium containing small amounts of aluminum, magnesium, and possibly other metals may be employed in place of lithium metal as anode. Similarly, lithium anodes having a surface layer of aluminum may be employed.

While the invention has been described and illustrated in terms of a thionyl chloride cathode-electrolyte solvent, it is to be understood that co-solvents such as phosphoryl chloride may be employed in certain instances while still obtaining the basic and novel characteristics of the invention.

-12-

Electron microscope examination of lithium anodes exposed respectively to thionyl chloride/$LiAlCl_4$ electrolytes and to thionyl chloride electrolytes of the invention demonstrated that the anode film resulting when electrolytes of the invention are employed is markedly more open as compared to the densely populated, blocky precipitate (believed to be LiCl) noted on the anode when $LiAlCl_4$ is used to enhance conductivity. These observations confirm that electrolytes of the invention are considerably less passivating than those used heretofore.

Although the present invention has been described in conjunction with preferred embodiments, it is to be understood that modifications and variations may be resorted to without departing from the spirit and scope of the invention, as those skilled in the art will readily understand. Such modifications and variations are considered to be within the purview and scope of the invention and appended claims.

EP-58 380
Rayovac Corporation

- 13 -

C L A I M S

1. A non-aqueous electrochemical cell having a metal anode above hydrogen in the EMF series, a liquid oxyhalide cathode depolarizer, a cathode current collector and a conductivity-enhancing amount of a dissolved electrolyte salt from the group consisting of the reaction product of niobium pentachloride and at least one compound from the group consisting of lithium bromide, lithium sulfide, lithium oxide, or lithium chloride.

2. The cell according to claim 1 wherein the reaction product is the equimotar reaction product.

3. The cell in according to claim 1 or 2 wherein said metal anode is lithium or a lithium alloy and said liquid oxyhalide is thionyl chloride.

4. The cell according to claim 1 or 2 wherein said electrolyte salt is the reaction product of niobium pentachloride and lithium bromide.

5. The cell in according to claims 1 to 4 having a lithium anode provided with an extended surface.

/2

6.      The cell according to claims 1 to 5 wherein said electrolyte salt is dissolved in an amount of at least 0.1 molar.

7.      The cell according to claims 1 to 6 wherein $LiAlCl_4$ is also contained in said liquid oxyhalide.

8.      A method for enhancing the conductivity of a non-aqueous cell having a liquid oxyhalide cathode depolarizer which comprises dissolving in said liquid oxyhalide an electrolyte salt from the group consisting of the reaction product of niobium pentachloride with at least one compound from the group consisting of lithium bromide, lithium sulfide, lithium oxide and lithium chloride.

9.      Conductivity-improving complex salts for use in liquid oxyhalide cathode electrolytes of the cells as claimed in claims 1 to 6 having the empirical formular $Li_2X \cdot Nb_2Cl_{10}$ where X is sulfur and/or oxygen.

8188

0130507

| | **DOCUMENTS CONSIDERED TO BE RELEVANT** | | EP 84107204.4 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X,D | US - A - 4 307 160 (SHIPMAN et al.) <br> * Claims * <br> -- | 1,3,7 | H 01 M 6/14 <br> H 01 M 4/36 <br> C 01 G 33/00 |
| A | EP - A1 - 0 037 031 (GIPELEC) <br> * Claims * <br> -- | 1,3,7 | |
| A,D | US - A - 4 228 229 (GABANO et al.) <br> * Abstract * <br> -- | 1,3 | |
| A,D | US - A - 4 238 552 (DEY et al.) <br> * Abstract * <br> -- | 1,3 | |
| A | GMELINS HANDBUCH DER ORGANISCHEN CHEMIE, 8th edition, system-no. 49, part B4, 1973. "Niob, Alkali-oxoniobate. Niobverbindungen mit weiteren Kationen. Kohlenstoffver-bindungen des Niob." <br> VERLAG CHEMIE-GMBH-Weinheim/Berg-straße <br> pages 232, 297 <br> ---- | 9 | |

**TECHNICAL FIELDS SEARCHED (Int. Cl. ³)**

H 01 M
C 01 G

The present search report has been drawn up for all claims

| Place of search | Date of completion of the search | Examiner |
|---|---|---|
| VIENNA | 28-09-1984 | LUX |